# EUROPEAN PATENT SPECIFICATION

(11) **EP 2 415 573 B1**
(45) Date of publication and mention of the grant of the patent: **31.10.2012**
(21) Application number: 10400040.1
(22) Date of filing: 05.08.2010
(51) Int. Cl.: B29B 11/16

(54) **Method to produce a tapered composite preform**
Verfahren zur Herstellung einer verjüngten Vorform aus Verbundwerkstoff
Procédé de production d'une préforme composite biseautée

(43) Date of publication of application: 08.02.2012
(73) Proprietor: Eurocopter Deutschland GmbH, 86609 Donauwörth (DE)
(72) Inventor: Gubernatis, Stefan, 80469 München (DE); Weiland, Frank, 81541 München (DE); Dorn, Florian, 83623 Dietramszell (DE); Maier, Tobias, 84180 Loiching/Kronwieden (DE)
(74) Representative: GPI & Associés

(56) References cited:
- EP-A1- 1 609 584
- DE-A1-102007 015 518
- DE-A1-102007 058 727
- DE-A1-102008 057 708

## Description

The invention relates to a method to produce a composite preform with tapered sides with the features of the preamble of any of claims 1, 6 or 8.

The document JP 2004218133 A discloses a method and an apparatus for producing a dry preform for composite materials having an arbitrary shape. The dry preform for structural materials is produced by opposing pin-implanting members having a number of pins to pin-implanting members having a number of pins with the sides of opposite ends and, in which pins are implanted, opposed at prescribed intervals, arranging upper connecting members and lower connecting members on these pin-implanting members and pin-implanting members to be integrated with nuts, linearizing a center line in the longitudinal direction of a production apparatus in which the assembly is arranged on stepped parts at both ends of interval-retaining members to form a primary preform having nearly trapezoidal shape in which thickness and/or width is continuously changed. The pins used to hold and form the preforms harm the material and therefore said method of the state of the art is not suitable for high quality applications.

When manufacturing composite preforms it may be necessary to taper a composite laminate due to design constraints.

It is an object of the present invention to provide at least one method to produce a composite preform with tapered sides from layers arranged to a preform laminate, said method should allow said tapered preform to be reproducible, to deliver geometrically precise layer sides with few loose fibers and should allow tapered preforms with different sizes and different tapering angles up to at least 80° in a fast process and with low workforce.

The solution is provided with a method to produce a composite preform with the features of claims 1, 6 or 8. Preferred embodiments of the invention are presented in the subclaims.

According to the invention a method is provided to produce a composite preform with tapered sides from more than one layer of fibres with the following steps: Arranging the more than one layers of a dry fabric at a tool with a curved surface, fixing of at least one first end of the more than one layers to the tool while allowing movement for each layer relative to its at least one adjacent layer within the respective plane of each layer, bending of the more than one layers around said curved surface with a predetermined angle, providing at least one second end of the more than one layers, preferably clamping of the more than one layers at a predefined distance from the fixation of the first end to the tool, cutting the more than one layer next to the second ends of the more than one layers in a preferably vertical plane relative to the plane of the more than one layer next to the at least one second end, removing the more than one layers from the curved surface of the tool and straighten the more than one layers. The invention takes advantage of the principle according to which dry fibre layers after bending have an inner bending radius smaller than an outer bending radius of an outer layer due to the material thickness of said layers. As a consequence any stacked dry fibre layers have to slide along each other during bending, such process being reversible for dry fibre laminates. Fixing the bent layer and cutting them normal to their surfaces with the ends of the bent layers in line, leads to different lengths of the at least one cut outer layer versus the at least one cut inner layer and versus all optional layers in between. The shortest layer will be the inner layer, the longest layer will be the outer layer and the lengths of all optional layers in between vary depending from their radii during bending with the consequence that straightening of the more than one layers after cutting and releasing of their ends will lead to back-sliding of the dry fibre layers along each other during their way back from the bent to the straight arrangement and will consequently lead to offset the respective ends of said layers, the biggest offset being between the outer layer and the inner layer of an end and intermediate offsets versus all optional layers in between resulting in tapered sides of the composite preform. A cut normal to a layer of fibres will lead to good quality edges, namely edges with few loose fibres no fibre fray out and/or undulations - as a consequence of the cut having been effected normal to the plane of the layer even when numerous layer for laminates thicker than 3 mm are cut at a time. The inventive method takes advantage of the effect that while cutting the bent layers as vertically as possible tapered sides of the straightened layers will result and consequently a preform tapered along the cut sides of the more than one layers with good quality will result. The angle of inclination of said tapered sides may be varied by angular cuts relative to the plane of the layer. The tapering of the cut sides can as well be shifted from one cut side to the other according to the invention by choosing suitable locations of any joints and/or fixations and/or clamps relative to the curvature and the distances of said cuts of the layers from said locations and the tapering can be varied from one cut side to the other by the timing of the release of the fixations and/or clamps relative to each other. The inventive method results in a fast, reproducible and automatable process to taper laminates with a high quality of the respective cut sides of the layers. The inventive method can be tailored to variable sizes and lengths of the tapered preform and to variable tapering angles till up to more than 360°. An endless fabric for forming the piled up layers by rotating the tool with curved surfaces according to an embodiment of the inventive method allows to accelerate the inventive method of production at low workforce and with reduced tool complexity.

According to a preferred embodiment of the inventive method layers of equal length are arranged to a stack of layers with a predetermined height and said layers are joint at a position determined by the required bending angle, such as about in the middle, before said layers are arranged at the tool with the curved surface. All first ends of the stack of layers are fixed to the tool in order to define a starting point for the layers to be bent and to avoid said ends falling off from the tool and getting lost after cutting. All second ends of the stack of layers are fixed to the tool after bending to prevent said seconds ends from falling off from the tool and getting lost after cutting. The stack of layers is clamped close to the first and second ends of said layers and cut in the small gaps between the clamps and the respective ends. The application of said preferred embodiment of the inventive method to prefabricated piles of dry layers results in tapering of each of the cut sides of the preform till about up to 80° with respective cuts normal to the surface of the bent layers.

According to a further preferred embodiment of the inventive method a tool with cylindrical surfaces with flat extensions between said cylindrical surfaces is used to vary the lengths of the more than one layers without altering the tapering angles at the cut sides.

According to a further preferred embodiment of the invention an endless fabric layer is provided at the tool with the at least partly curved surface and the first end of the endless fabric layer is fixed to said tool with an adhesive tape or a clamp. Consequently the endless fabric layer is bent to more than one layer, i. e. is bent to more than 360° around said curved surface up to a predetermined angle, a second end of the endless fabric layer is provided and fixed with an adhesive tape or a clamp via the top layer to the curved surface of the tool. Clamps are located close to the first and second ends of said bent layers leaving a small gap between the adhesive tapes and the respective clamps and with a removable clamp the layers are joint at the tool to locally combine the layers. The layers are cut as described before, the respective clamps are released and the bent layers are straightened after the dismounting of the cut layers from the tool. Said inventive method saves some production steps and reduces the tooling time and tool complexity.

According to a further preferred embodiment of the inventive method the layers are arranged to a stack of more than one, particularly two layers with a predetermined height and said layers are joined at a position inside from the first end before fixing and bending said layers around the tool with the at least partly curved surface up to a predetermined angle. The layers are cut essentially vertically and free from the tool at a predetermined position for one tapered second side after having clamped the layers inside said second end in an even position. Said inventive method allows a preform with a variation of the length and only one cut side being tapered and bending angles greater than 360°.

According to a further preferred embodiment of the inventive method said stacked more than one, particularly two layers with one cut side being tapered may be joined at a position inside from the cut side, cut inside from the opposite joint at the first end before arranging said joint layers at the tool for bending them around the curved surface and cutting said layers essentially vertically and free from the tool at a predetermined position at the loose end for a tapered side at the first end allowing again bending angles greater than 360°.

According to a further preferred embodiment of the inventive method said tool is used with a scale showing the bending/tapering angle as a function of a thickness of said dry layers. This makes it easier for a user to reach the desired values for any bending/tapering angles.

According to a further preferred embodiment of the invention cutting is effected by means of an ultrasonic cutting end effector.

Preferred embodiments of the inventive method are presented in the following description with reference to the attached drawings.
Fig: 1-3 show a schematic chart for a first method to produce a composite preform with tapered sides according to the invention,
   Fig: 4 shows a schematic view of an arrangement to produce a composite preform with tapered sides according to a second method of the invention,
   Fig: 5-7 show a schematic chart of a third method to produce a composite preform with tapered sides according to the invention,
   Fig: 8-13 show a schematic chart of a fourth method to produce a composite preform with tapered sides according to the invention,
   Fig: 14 shows a schematic view of a product made of any of the preceding methods according to the invention.

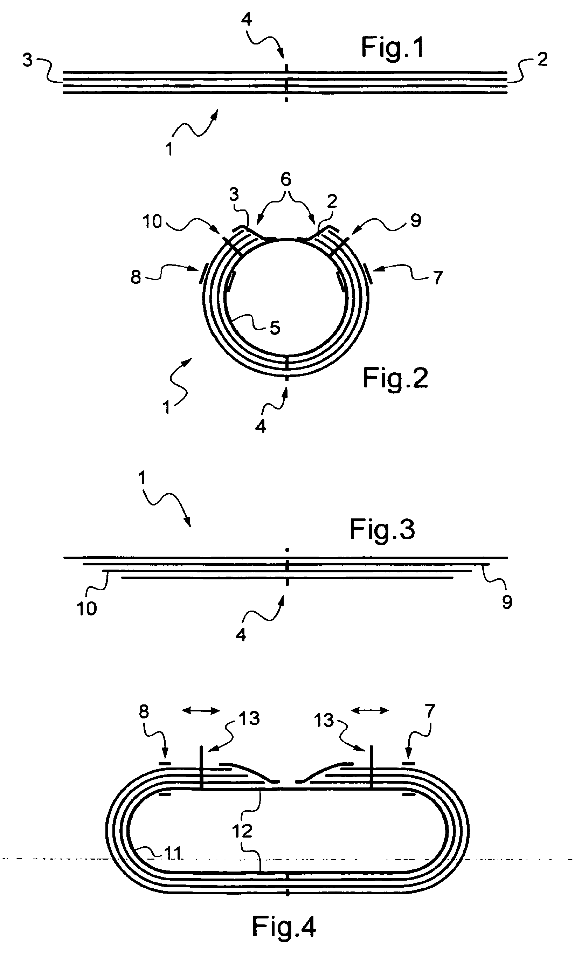

According to Fig. 1 four dry layers 1 of equal length are arranged to form a stack with each of its opposed first and second ends 2, 3 respectively matching. The four dry layers 1 are jointly stitched at an intermediate position 4 between the respective ends 2, 3 of the four dry layers 1. The four dry layers 1 are longer than needed.

According to Fig. 2 the four dry layers 1 are arranged at a cylindrical tool 5 made of paper. The four dry layers 1 are fixed at their first ends 2 by means of an adhesive tape 6 to the curved surface of said cylindrical tool 5. The four dry layers 1 are bent around the cylindrical tool 5. The tool 5 is provided with a scale, showing the bending/tapering angle as a function of a thickness of said dry layers 1.

The four dry layers 1 are fixed at their second ends 3 by means of another adhesive tape 6 to said cylindrical tool 5. A clamp 7 is mounted to hold the four dry layers 1 to the cylindrical tool 5 next to their first ends 2 and a clamp 8 is mounted to hold the four dry layers 1 to the cylindrical tool 5 next to their second ends 3, each of said clamps 7, 8 leaving a small gap to the respective first and second ends 2, 3 of the four dry layers 1.

The four dry layers 1 are cut radial relative to said cylindrical tool 5 between the clamp 7 and the first end 2 at a position 9 and as well radial relative to said cylindrical tool 5 between clamp 8 and the second end 3 at a position 10, said positions defining the longest extension for the tapered preform. Cutting is performed with a robot with an ultrasonic cutting end effector (not shown).

According to Fig. 3 the clamps 7, 8 were taken off and the four dry layers 1 are removed from the cylindrical tool 5 to be straightened. With the four dry layers 1 being held jointly stitched at the intermediate position 4 a preform with essentially symmetrically tapered cuts at positions 9, 10 results. By changing the position of the stitch from the intermediate position 4 to a more lateral position the tapering of the cut sides 9, 10 of the preform can be varied such variation being reciprocal to the respective distances of the stitch from the first and second ends 2, 3, i. e. the closer the stitch is to one of the first or second ends 2, 3 the less tapered will be the side of said close first or second end 2, 3.

According to Fig. 4 a second method to produce a composite preform with tapered sides is using three dry layers 1, said layers 1 being fixed, bent and clamped essentially the same way as shown in Fig. 1 - 3 but using a different tool 11 with two half cylindrical parts connected by essentially flat extensions 12. Said second method allows more flexibility for the positions 9, 10 of the cuts 13 between the clamps 7, 8 and the respective first and second ends 2, 3 without changing the bending angle of the preform defined by the three layers 1. Longer preforms are possible with the same tapering angle by using the tool 11 with two equal half cylindrical parts connected by longer flat extensions 12. Essentially symmetrically tapered sides of the preform result with the three dry layers 1 jointly stitched at an intermediate position 4 between the respective ends 2, 3 of the three dry layers 1.

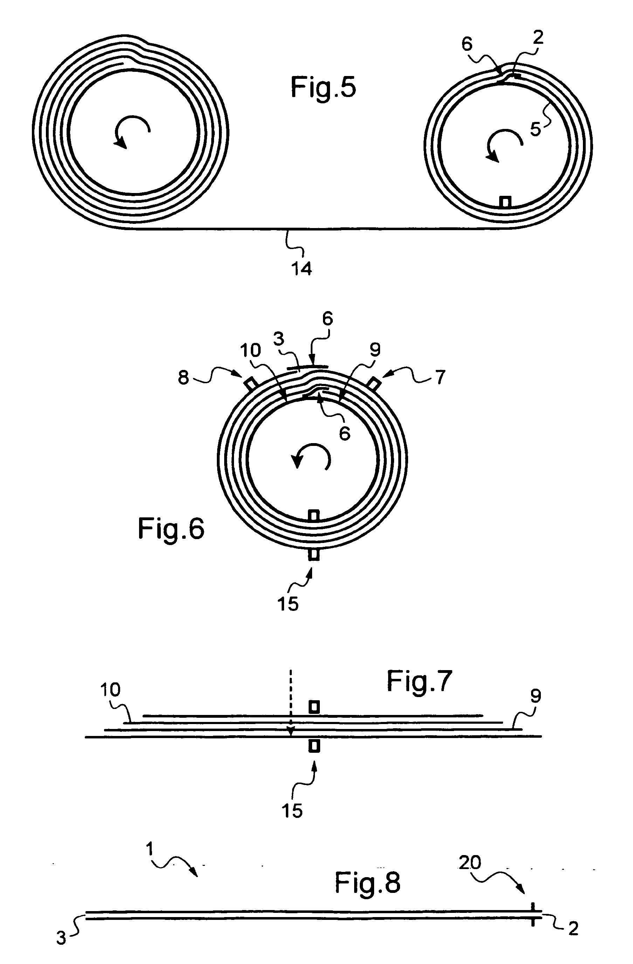

According to Fig. 5 a third method to produce a composite preform with tapered sides is presented. A first end 2 of an endless fabric layer 14 is fixed to the cylindrical tool 5 with an adhesive tape 6 and the endless fabric layer 14 is bent at least more than one time by rotating said cylindrical tool 5 anti clockwise as many times as layers 14 in the preform are needed.

According to Fig. 6 of the third method the endless fabric layer 14 is cut after a predetermined number of rotations of the cylindrical tool 5 to provide a second end 3 of the fabric layer 14, said second end 3 being fixed with an adhesive tape 6 onto the previously mounted top fabric layer 14. The more than one bent fabric layers 14 are clamped at the positions 7, 8 close to the subsequent cutting positions 9, 10 next to the top of the cylindrical tool 5 and a removable means 15 such as a removable clamp 15 is added to the fabric layers 14 at the bottom of the cylindrical tool 5 to locally combine the layers 14. The fabric layers 14 are cut and subsequently dismounted from the cylindrical tool 5 essentially the same way as shown in Fig. 2, 3 with a resulting preform with essentially symmetrically tapered sides.

According to Fig. 7 the dismounted layers 14 may be combined by sewing to replace the removed clamp 15. The cylindrical tool 11 with essentially flat extensions 12 may be used as a core for the fabric layers 14 instead of the cylindrical tool 5.

According to Fig. 8 a fourth method to produce a composite preform with tapered sides is presented. Two dry layers 1 of equal length but longer than needed are arranged to form a stack. The layers 1 are joined with stitches 20 to first ends 2, preferably outside the later preform.

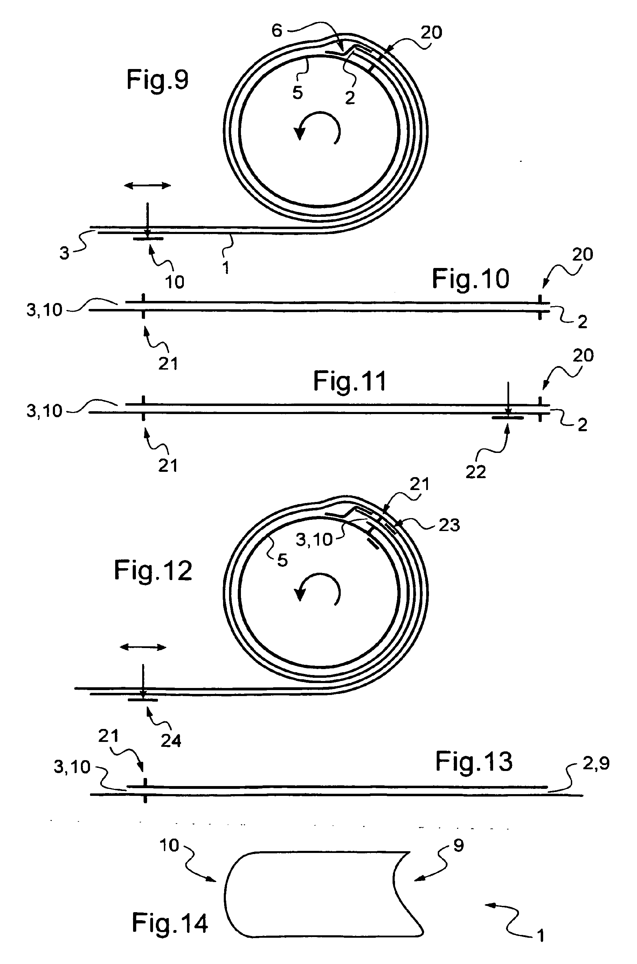

According to Fig. 9 the two stacked and joint layers 1 are arranged at the cylindrical tool 5 and are fixed at their joint first ends 2 by means of an adhesive tape 6 to the surface of said cylindrical tool 5. The two dry layers 1 are bent around the cylindrical tool 5 at least more than one time by rotating said cylindrical tool 5 up to more than 360° till the desired bending angle is reached. After having clamped the layers inside said second end 3 in an even position the layers 1 are cut after the predetermined number of rotations of the cylindrical tool 5 to provide a cut side with a predetermined distance from the joint first end 2 of the layers 1 according to the wanted length of the preform, said second end 3 being free from the cylindrical tool 5 when cut. The layers 1 are subsequently dismounted from the cylindrical tool 5 to form a straight preform of two stacked layers 1 with all the tapering at the cut side opposite to the joint stitch at the first ends 2 with no tapering at all (see Fig. 10).

If only the cut side of the stacked layers 1 is to be tapered the preform of Fig. 10 is the end-product.

If the first end 2 of the stacked layers 1 has to be tapered additionally to the tapered cut side at the second end 3, the straightened two layers 1 are jointly stitched at an inside position 21 of the one tapered cut side at the second end 3 (see Fig. 10).

According to Fig. 11 the joint first ends 2 are cut off from the layers 1 at a position 22 inside from stitch 20. The two stacked and solely next to the second ends 3 stitched layers 1 are arranged at the cylindrical tool 5 and are fixed at said tapered second ends 3 by means of a flat clamp 23 (see Fig. 12) to the surface of said cylindrical tool 5. The two dry layers 1 are bent around the cylindrical tool 5 as much as needed for the wanted tapering at the first ends 2. The layers 1 are cut at a position 24 according to the needed length, said fist ends 2 being free from the cylindrical tool 5 when cut. The layers 1 are subsequently dismounted from the cylindrical tool 5 to form a straight preform of two stacked layers 1 with a tapered cut side at the second end 3 and a tapered cut side at the first end 2 (see Fig. 13) allowing differently tapered angles on either sides.

According to Fig. 14 the cutting of the layers 1 may be adjusted to requested shapes of the sides of the layers 1 without altering the tapering angle of the cut sides as such.

## Claims

1. A method to produce a composite preform with tapered sides (9, 10) from more than one layer (1) of fibres by
- Providing said more than one layer (1) longer than needed, and
- Arranging said more than one layer (1) at a tool (5) with an at least partly curved surface,
**characterized by**:
- Fixing of first ends (2) of the more than one layers (1) to said - tool (5),
- Bending of said more than one layer (1) around said curved surface up to a predetermined angle, while allowing movement for each of said more than one layers (1) relative to its at least one adjacent layer (1) within the respective plane of each layer (1),
- Providing second ends (3) of the more than one layers (1) and Fixing of said second ends (2) of the more than one layers (1) to said tool (5),
- Cutting the more than one layers (1) at least next to the second ends (3) of the more than one layers (1) at the position for the tapered side (10),
- Dismounting the more than one cut layers (1) from the tool (5), and
- Straightening of the more than one layers (1).

2. A method according to claim 1,
**characterized by** arranging said layers (1) to a stack of layers (1) with a predetermined height, joining said layers (1) at a position determined by the required bending angle, for example in their middle (4), before arranging said layers (1) at the tool (5) with the at least partly curved surface, locating clamps (7, 8) close to the first and second ends (2, 3) of said layers (1) after bending of said layers (1) around the curved surface of the tool (5), fixing of the first and second ends (2, 3) of said layers (1) additionally to the curved surface of the tool (5) by means of respective adhesive tapes (6) or clamps, while leaving a small gap between the adhesive tapes (6) and the respective clamps (7, 8), cutting said layers (1) inside the small gap at the positions for the tapered sides (9, 10) between the adhesive tapes (6) and the respective clamps (7, 8), releasing the respective clamps (7, 8) and straightening of the bent layers (1) after the dismounting of said stack of cut layers (1) from the tool (5).

3. A method according to claim 2,
**characterized by** fixing all first and second ends (2, 3) of said layers (1) to the tool (5).

4. A method according to claim 2,
**characterized by** joining of said layers (1) by means of sewing.

5. A method according to claims 1 or 2,
**characterized by** using a tool (5) with partly cylindrical and partly flat surfaces.

6. A method to produce a composite preform with tapered sides (9, 10) from one layer (14) of fibres
**characterized by**
- Providing an endless fabric layer (14) at a tool (5) with an at least partly curved surface,
- Fixing of a first end (2) of the endless fabric layer (14) to said tool (5),
- Bending of the endless fabric layer to more than one layer (14) around said curved surface up to a predetermined angle, while allowing movement for each of said more than one layer (14) relative to its at least one adjacent layer (14) within the respective plane of each layer (14),
- Providing a second end (3) of the endless fabric layer (14),
- Fixing of the second end (3) of the endless fabric layer (14) via the top layer (14) to the curved surface of the tool (5),
- Locating clamps (7, 8) close to the first and second ends (2, 3) of said layers (14) while leaving a small gap between the fixations to said tool (5) and the respective clamps (7, 8),
- Joining the layers (14) at the tool (5) with removable means (15) to locally combine the layers (14),
- Cutting said layers (14) inside the small gap between the fixations to said tool (5) and the respective clamps (7, 8) at the positions for the tapered sides (9, 10), and
- Releasing the respective clamps (7, 8).

7. A method according to claim 6, **characterized by** replacing the removable means (15) by sewing.

8. A method to produce a composite preform with at least one tapered side (9, 10) from more than one layer (1) of fibres by
- Providing said at least more than one layer (1) longer than needed,
**characterized by**
- Arranging said layers (1) to a stack of layers (1) with a predetermined height, at a tool (5) with an at least partly curved surface,
- Joining said layers (1) at a position (20) inside from a first end (2) before arranging said layers (1) at the tool (5) with the at least partly curved surface,
- Bending of said layers (1) around said curved surface up to a predetermined angle, and
- Cutting said layers (1) free from the tool (5) at a predetermined position for the tapered side (10).

9. A method according to claim 8,
**characterized by**
- Joining said layers (1) at a position (21) inside from the cut side (10),
- Cutting said layers (1) essentially vertically and free from the tool (5) at a predetermined position inside from the joint (20) inside from the first end (2), before arranging said joint layers (1) with their position (21) at the tool (5) with the at least partly curved surface, and
- Cutting said layers (1) free from the tool (5) at a predetermined position for the other tapered side (9) after bending of said layers (1) around said curved surface up to a predetermined angle.

10. A method according to any of the preceding claims,
**characterized by** cutting the more than one layers (1, 14) with an ultrasonic cutting end effector.

11. A method according to any of the preceding claims,
**characterized by** cutting in an essentially vertical plane relative to the plane of the more than one layers (1, 14) next to their respective first and second ends (2, 3).

12. A method according to any of the preceding claims,
**characterized by** using a tool (5) with a scale, showing the bending/tapering angle as a function of a thickness of said dry layers (1, 14).

## Patentansprüche

1. Verfahren zur Herstellung einer Vorform aus Verbundwerkstoff mit sich verjüngenden Rändern (9, 10) aus einer Faser-Multischicht (1) durch
- das Bereitstellen der genannten Multischicht (1) in einer größeren Länge als benötigt und
- das Anbringen der genannten Multischicht (1) an einem Werkzeug (5) mit einer wenigstens teilweise gekrümmten Führungsfläche,
**gekennzeichnet durch**:
- das Befestigen der ersten Enden (2) der Multischicht (1) an dem genannten Werkzeug (5);
- das Biegen der genannten Multischicht (1) um die genannte gekrümmte Führungsfläche herum, bis ein vordefinierter Winkel erreicht ist, während die Bewegung jeder der genannten Schichten (1) in Bezug auf die mindestens von einer Seite an sie angrenzende Schicht (1) innerhalb der jeweiligen Ebene jeder Schicht gewährleistet ist.
- das Bereitstellen von zweiten Enden (3) der Multischicht (1) und das Befestigen der genannten zweiten Enden (2) der Multischicht (1) an dem genannten Werkzeug (5),
- das Durchtrennen der Multischicht (1) mindestens nahe den zweiten Enden (3) der Multischicht (1) an der für den sich verjüngenden Rand (10) vorgesehenen Stelle,
- das Entfernen der Multischicht (1) von dem Werkzeug (5), und
- das Begradigen der Multischicht (1).

2. Verfahren gemäß Anspruch 1.
**Gekennzeichnet durch** das Anordnen der genannten Schichten (1) zu Stapeln von Schichten (1) in einer vordefinierten Höhe, das Verbinden der genannten Schichten (1) an einer Stelle, die **durch** den erforderlichen Biegungswinkel bestimmt wird, zum Beispiel in ihrer Mitte (4), vor dem Anbringen der genannten Schichten (1) an dem Werkzeug (5) mit der wenigstens teilweise gekrümmten Führungsfläche, das Anbringen von Klemmen (7, 8) nahe den ersten und zweiten Enden (2, 3) der genannten Schichten (1) nach dem Biegen der genannten Schichten (1) um die gekrümmte Führungsfläche des Werkzeugs (5) herum, das Befestigen der ersten und zweiten Enden (2, 3) der genannten Schichten (1) zusätzlich zu der gekrümmten Führungsfläche des Werkzeugs (5) mittels entsprechender Klebebänder (6) oder Klemmen, dabei ist ein kleiner Abstand zwischen den Klebebändern (6) und den entsprechenden Klemmen (7, 8) einzuhalten, das Durchtrennen der genannten Schichten (1) innerhalb des kleinen Abstands an den für die sich verjüngenden Ränder (9, 10) vorgesehenen Stellen zwischen den Klebebändern (6) und den entsprechenden Klemmen (7, 8), das Lösen der entsprechenden Klemmen (7, 8) und das Begradigen der gekrümmten Schichten (1) nach dem Entfernen des genannten Stapels der durchtrennten Schichten (1) von dem Werkzeug (5).

3. Verfahren gemäß Anspruch 2,
**gekennzeichnet durch** das Befestigen sämtlicher ersten und zweiten Enden (2, 3) der genannten Schichten (1) am Werkzeug (5).

4. Verfahren gemäß Anspruch 2,
**gekennzeichnet durch** das Verbinden der genannten Schichten (1) **durch** Nähen.

5. Verfahren gemäß Anspruch 1 oder 2,
**gekennzeichnet durch** den Einsatz eines Werkzeugs (5) mit teils zylindrischen und teils flachen Führungsflächen.

6. Verfahren zur Herstellung einer Vorform aus Verbundwerkstoff mit sich verjüngenden Rändern (9, 10) aus einer einzelnen Faserschicht (14) **gekennzeichnet durch**
- das Bereitstellen einer Endlosfaser-Gewebeschicht (14) an einem Werkzeug (5) mit einer wenigstens teilweise gekrümmten Führungsfläche,
- das Befestigen eines ersten Endes (2) der Endlosfaser-Gewebeschicht (14) an dem genannten Werkzeug (5),
- das Biegen der Endlosfaser-Gewebeschicht zu mehr als einer Schicht (14) um die genannte gekrümmte Führungsfläche herum, bis ein vordefinierter Winkel erreicht ist, während die Bewegung für jede der genannten Multischicht (14) in Bezug auf die mindestens von einer Seite an sie angrenzende Schicht (14) innerhalb der jeweiligen Ebene jeder Schicht gewährleistet ist.
- das Bereitstellen eines zweiten Endes (3) der Endlosfaser-Gewebeschicht (14),
- das Befestigen des zweiten Endes (3) der Endlosfaser-Gewebeschicht (14) über die obere Schicht (14) an der gekrümmten Führungsfläche des Werkzeugs (5),
- das Anbringen von Klemmen (7, 8) nahe den ersten und zweiten Enden (2, 3) der genannten Schichten (14), dabei ist ein kleiner Abstand zwischen den Befestigungspunkten an dem genannten Werkzeug (5) und den entsprechenden Klemmen (7, 8) einzuhalten,
- das Verbinden der Schichten (14) an dem Werkzeug (5) mit ablösbaren Mitteln (15) zur lokalen Kombination der Schichten (14),
- das Durchtrennen der genannten Schichten (14) innerhalb des kleinen Abstands zwischen den Befestigungen an dem genannten Werkzeug (5) und den entsprechenden Klemmen (7, 8) an den für die sich verjüngenden Ränder (9, 10) vorgesehenen Stellen und
- Lösen der entsprechenden Klemmen (7, 8).

7. Verfahren gemäß Anspruch 6,
**gekennzeichnet durch** das Ersetzen der ablösbaren Mittel (15) **durch** Nähen.

8. Verfahren zur Herstellung einer Vorform aus Verbundwerkstoff mit mindestens einem sich verjüngenden Rand (9, 10) aus einer Faser-Multischicht (1) durch
- das Bereitstellen der genannten Multischicht (1) in einer größeren Länge als benötigt, **gekennzeichnet durch**
- das Anordnen der genannten Schichten (1) zu einem Stapel von Schichten (1) in einer vordefinierten Höhe, an einem Werkzeug (5) mit einer wenigstens teilweise gekrümmten Führungsfläche,
- das Verbinden der genannten Schichten (1) an einer Stelle (20) innerhalb von einem ersten Ende (2) vor dem Anbringen der genannten Schichten (1) an dem Werkzeug (5) mit der mindestens teilweise gekrümmten Führungsfläche,
- das Biegen der genannten Schichten (1) um die genannte gekrümmte Führungsfläche herum, bis ein vordefinierter Winkel erreicht ist, und
- das Durchtrennen der vom Werkzeug (5) gelösten genannten Schichten (1) an einer für den sich verjüngenden Rand (10) vordefinierten Stelle.

9. Verfahren gemäß Anspruch 8,
**gekennzeichnet durch**
- das Verbinden der genannten Schichten (1) an einer Stelle (21) innerhalb der Schnittstelle (10),
- das Durchtrennen der genannten Schichten (1) im Wesentlichen senkrecht und gelöst vom Werkzeug (5) an einer vordefinierten Stelle innerhalb der Verbindungsstelle (20) innerhalb des ersten Endes (2), vor dem Anbringen der genannten verbundenen Schichten (1) mit ihrer Position (21) an dem Werkzeug (5) mit der wenigstens teilweise gekrümmten Führungsfläche, und
- das Durchtrennen der vom Werkzeug (5) gelösten genannten Schichten (1) an der für den anderen sich verjüngenden Rand (9) vordefinierten Stelle nach dem Biegen der genannten Schichten (1) um die genannte gekrümmte Führungsfläche herum, bis ein vordefinierter Winkel erreicht ist,.

10. Verfahren gemäß irgendeinem der obenstehenden Ansprüche,
**gekennzeichnet durch** das Durchtrennen der Multischicht (1, 14) mit einem Ultraschall-Schneidendeffektor.

11. Verfahren gemäß irgendeinem der obenstehenden Ansprüche,
**gekennzeichnet durch** das Durchtrennen in einer im Wesentlichen senkrechten Ebene in Bezug auf die Ebene der Multischicht (1, 14) nahe ihren jeweiligen ersten und zweiten Enden (2, 3).

12. Verfahren gemäß irgendeinem der obenstehenden Ansprüche,
**gekennzeichnet durch** den Einsatz eines Werkzeugs (5) mit einer Skala, die den Biegungs-Nerjüngungswinkel als Funktion einer Stärke der genannten trockenen Schichten (1, 14) anzeigt.

## Revendications

1. Une méthode permettant de réaliser une ébauche en matériau composite et aux extrémités biseautées (9, 10) à partir de couches multiples (1) de fibres
- en donnant auxdites couches multiples (1) une longueur supérieure à la longueur nécessaire, et
- en disposant lesdites couches multiples (1) sur un outil (5) présentant au moins une surface courbe,
**caractérisée en ce que** :
- les premières extrémités (2) des couches multiples (1) sont fixées audit outil (5).
- lesdites couches multiples (1) sont cintrées sur ladite surface courbe selon un angle prédéterminé, lesdites couches multiples (1) conservant une liberté de mouvement par rapport aux couches adjacentes (1) selon le plan respectif de chaque couche (1)
- les couches multiples (1) sont pourvues de secondes extrémités (3), lesdites secondes extrémités (2) des couches multiples (1) étant fixées audit outil (5),
- les couches multiples (1) sont découpées au moins à proximité des secondes extrémités (3) des couches multiples (1) au niveau du côté biseauté (10),
- les couches multiples découpées (1) sont déposées de l'outil (5), et
- les couches multiples (1) sont redressées.

2. Une méthode selon la revendication 1.
**caractérisée en ce que** lesdites couches (1) sont disposées en un empilement de couches (1) selon une hauteur prédéterminée, lesdites couches (1) étant jointes en un point déterminé par l'angle de cintrage requis, par exemple en leur milieu (4), avant que lesdites couches (1) soient disposées sur l'outil (5) au niveau de la surface au moins en partie courbe, en positionnant des brides (7, 8) à proximité des premières et secondes extrémités (2, 3) desdites couches (1) après avoir cintré lesdites couches (1) autour de la surface courbe de l'outil (5), en fixant les premières et secondes extrémités (2, 3) desdites couches (1) également à la surface de l'outil (5) au moyen de rubans adhésifs (6) ou brides respectifs, tout en laissant un petit espace entre les rubans adhésifs (6) et les brides respectives (7, 8), en découpant lesdites couches (1) dans le petit espace à l'emplacement des côtés biseautés (9, 10) entre les rubans adhésifs (6) et les brides respectives (7, 8), en desserrant les brides respectives (7, 8) et en redressant les couches cintrées (1) après avoir déposé de l'outil (5) ledit empilement de couches découpées (1).

3. Une méthode selon la revendication 2,
**caractérisée en ce que** toutes les premières et secondes extrémités (2, 3) desdites couches (1) sont fixées à l'outil (5).

4. Une méthode selon la revendication 2,
**caractérisée en ce que** lesdites couches (1) sont jointes par couture.

5. Une méthode selon la revendication 1 ou 2,
**caractérisée en ce qu'**un outil (5) présentant des surfaces en partie cylindriques et en partie planes est utilisé.

6. Une méthode permettant de réaliser une ébauche en matériau composite pourvue de côtés biseautés (9, 10) à partir d'une couche (14) de fibres **caractérisée en ce que**
- une couche sans fin de tissu (14) est disposée sur un outil (5) pourvue d'une surface au moins en partie courbe,
- une première extrémité (2) de la couche sans fin de tissu (14) est fixée audit outil (5),
- la couche sans fin de tissu est cintrée en couches multiples (14) autour de ladite surface courbe selon un angle prédéterminé, tout en laissant à chacune desdites couches multiples (14) une liberté de mouvement par rapport à au moins une de ses couches adjacentes (14) dans le plan respectif de chaque couche (14),
- la couche sans fin de tissu (14) est pourvue d'une seconde extrémité (3),
- la seconde extrémité (3) de la couche sans fin de tissu (14) est fixée à la surface courbe de l'outil (5) par la couche supérieure (14),
- des brides (7, 8) sont disposées à proximité des premières et secondes extrémités (2, 3) desdites couches (14) tout en laissant un petit espace entre les fixations audit outil (5) et les brides respectives (7, 8),
- les couches (14) sont jointes au niveau de l'outil (5) par des moyens démontables (15) afin de combiner localement les couches (14),
- lesdites couches (14) sont découpées dans le petit espace entre les fixations audit outil (5) et les brides respectives (7, 8) à l'emplacement des côtés biseautés (9, 10), et
- les brides respectives (7, 8) sont desserrées.

7. Une méthode selon la revendication 6,
caractérisée en ce les moyens démontables (15) sont remplacés par couture.

8. Une méthode permettant de réaliser une ébauche en matériau composite présentant au moins un côté biseauté (9, 10) à partir de couches multiples (1) de fibres
- en donnant auxdites couches multiples (1) une longueur supérieure à la longueur nécessaire,
**caractérisée en ce que**
- lesdites couches (1) sont disposées en un empilement de couches (1), selon une hauteur prédéterminée, sur un outil (5) présentant une surface au moins en partie courbe,
- lesdites couches (1) sont jointes en un point (20) vers l'intérieur à partir d'une première extrémité (2) avant que lesdites couches (1) soient disposées sur l'outil (5) présentant la surface au moins en partie courbe,
- lesdites couches (1) sont cintrées autour de ladite surface courbe selon un angle prédéterminé, et
- lesdites couches (1) sont découpées pour être dégagées de l'outil (5) à une position prédéterminée pour le côté biseauté (10).

9. Une méthode selon la revendication 8,
**caractérisée en ce que**
- lesdites couches (1) sont jointes en un point (21) vers l'intérieur à partir du côté découpé (10),
- lesdites couches (1) sont découpées essentiellement verticalement et dégagées de l'outil (5) en un point prédéterminé vers l'intérieur à partir de la jonction (20) vers l'intérieur à partir de la première extrémité (2), avant de disposer lesdites couches jointes (1) dans leur position (21) sur l'outil (5) présentant la surface au moins en partie courbe, et
- lesdites couches (1) sont découpées et dégagées de l'outil (5) en un point prédéterminé pour l'autre côté biseauté (9) après que lesdites couches (1) ont été cintrées autour de ladite surface courbe selon un angle prédéterminé.

10. Une méthode selon l'une des revendications précédentes quelle qu'elle soit, **caractérisée en ce que** les couches multiples (1, 14) sont découpées au moyen d'un effecteur de découpe à ultrasons.

11. Une méthode selon l'une des revendications précédentes quelle qu'elle soit, **caractérisée en ce que** la découpe est réalisée selon un plan essentiellement vertical par rapport au plan des couches multiples (1, 14) à proximité des premières et secondes extrémités respectives (2, 3).

12. Une méthode selon l'une des revendications précédentes quelle qu'elle soit, **caractérisée par** l'utilisation d'un outil (5) pourvu de graduations indiquant l'angle de cintrage/biseautage en fonction de l'épaisseur desdites couches sèches (1, 14).
